# EUROPEAN PATENT APPLICATION

(11) **EP 4 718 597 A2**
(43) Date of publication of application: **01.04.2026**
(21) Application number: 25192158.1
(22) Date of filing: 28.07.2025
(51) Int. Cl.: H01M 50/204, A62C 3/00, A62C 35/68, H01M 50/251

(54) **ENERGY STORAGE SYSTEM**

(30) Priority: 30.09.2024 KR 20240133192
(71) Applicant: SAMSUNG SDI CO., LTD., Yongin-si, Gyeonggi-do 17084 (KR)
(72) Inventor: Kim, Sootaek, Yongin-si 17084 (KR); Yang, Jongwoon, Yongin-si 17084 (KR)
(74) Representative: Marks & Clerk LLP

(57) **Abstract**

An energy storage system includes a plurality of battery modules, a fire-extinguishing tank accommodating a fire-extinguishing agent, and a pipe part connecting the plurality of battery modules to the fire-extinguishing tank, wherein each of the plurality of battery modules includes a plurality of battery cells and a fire-extinguishing tube which extends into the interior of each of the plurality of battery modules along an arrangement of the plurality of battery cells, wherein the pipe part includes: a distribution pipe connected to the fire-extinguishing tube in the battery modules; and an extension pipe including connecting portions connected to the distribution pipe, and a curved portion disposed between the connecting portions.

## Description

### FIELD

The disclosure relates to an energy storage system.

### BACKGROUND

An energy storage system is a system capable of storing surplus electricity or electrical energy produced from renewable energy sources. By utilizing an energy storage system, power supply and demand can be smoothly controlled by storing idle power during periods of low electrical demand and supplying electricity during periods of high electrical demand.

Spaces or facilities where energy storage systems are installed and operated must be equipped with facilities to suppress battery fires caused by electrical hazards such as electric shock, short circuits, and external surges. There is a growing demand for fire-extinguishing systems that can effectively suppress multiple battery fires and provide early suppression in case of highpressure fires in energy storage systems.

The information disclosed in the technical background is provided only to enhance understanding of the background and therefore may include information not constituting prior art.

### SUMMARY

Provided is an energy storage system capable of effectively suppressing and extinguishing fires.

However, the technical problems to be solved by the disclosure are not limited to the above-described challenges. Additional challenges not mentioned herein would be clearly understood by a person skilled in the art from the description provided below.

According to an aspect of an embodiment, an energy storage system includes a plurality of battery modules, a fire-extinguishing tank accommodating a fire-extinguishing agent, and a pipe part connecting the plurality of battery modules to the fire-extinguishing tank, wherein each of the plurality of battery modules includes a plurality of battery cells and a fire-extinguishing tube which extends into the interior of each of the plurality of battery modules along an arrangement of the plurality of battery cells, wherein the pipe part includes a distribution pipe connected to the fire-extinguishing tube in the battery modules and an extension pipe including connecting portions connected to the distribution pipe and a curved portion disposed between the connecting portions.

In an embodiment, the curved portion may protrude in a direction away from the plurality of battery modules.

In an embodiment, the curved portion may be placed between adjacent battery modules of the plurality of battery modules.

In an embodiment, the distance between the center of the curved portion and the center of each of the connecting portions may be 1.5% to 15% of the length of the extension pipe.

In an embodiment, the curved portion may include a first layer and a second layer including a material different from a material of the first layer.

In an embodiment, the first layer may include at least one of thermoplastic polyurethane (TPU), thermoplastic polyester elastomer (TPEE), thermoplastic vulcanizate (TPV), or thermoplastic elastomer (TPE).

In an embodiment, the second layer may include at least one of polyamide (PA), polycarbonate (PC), polyetheretherketone (PEEK), polyetherketoneketone (PEKK), polyphenylene sulfide (PPS), polyether imide (PEI), polyethersulfone (PES), or polyimide (PI).

In an embodiment, the fire-extinguishing tube may be positioned at a position at least 30% but not more than 90% of the height of the battery cell (e.g. each of the battery cells).

In an embodiment, the fire-extinguishing tube may include at least one of polyamide (PA), polycarbonate (PC), polyetheretherketone (PEEK), polyetherketoneketone (PEKK), polyphenylene sulfide (PPS), polyether imide (PEI), polyethersulfone (PES), or polyimide (PI).

**In** an embodiment, the extension pipe and the distribution pipe may be detachably connected to one another, and the distribution pipe and the fire-extinguishing tube may be detachably connected to one another.

According to an aspect of an embodiment, an energy storage system includes a plurality of battery modules, a fire-extinguishing tank accommodating a fire-extinguishing agent, and a pipe part connecting the plurality of battery modules to the fire-extinguishing tank, wherein each of the plurality of battery modules (e.g. the plurality of battery modules) includes a plurality of battery cells and a fire-extinguishing tube which extends into the interior of each of the plurality of battery modules along the arrangement of the plurality of battery cells, wherein the pipe part may include a first layer and a second layer including a different material (e.g. a material different) from a material of the first layer.

**In** an embodiment, the first layer may include at least one of thermoplastic polyurethane (TPU), thermoplastic polyester elastomer (TPEE), thermoplastic vulcanizate (TPV), or thermoplastic elastomer (TPE).

**In** an embodiment, the second layer may include at least one of polyamide (PA), polycarbonate (PC), polyetheretherketone (PEEK), polyetherketoneketone (PEKK), polyphenylene sulfide (PPS), polyether imide (PEI), polyethersulfone (PES), or polyimide (PI).

**In** an embodiment, the pipe part may include a distribution pipe connected to each of the plurality of fire-extinguishing tubes, and an extension pipe including connecting portions connected to the distribution pipe, and a curved portion disposed between the connecting portions.

**In** an embodiment, the curved portion may protrude in a direction away from the plurality of battery modules.

**In** an embodiment, the curved portion may be placed between adjacent battery modules of the plurality of battery modules.

**In** an embodiment, the distance between the center of the curved portion and the center of each of the connecting portions may be 1.5% to 15% of the length of the extension pipe.

**In** an embodiment, the fire-extinguishing tube may be positioned at a position at least 30% but not more than 90% of the height of the battery cell.

In an embodiment, the fire-extinguishing tube may include at least one of polyamide (PA), polycarbonate (PC), polyetheretherketone (PEEK), polyetherketoneketone (PEKK), polyphenylene sulfide (PPS), polyether imide (PEI), polyethersulfone (PES), or polyimide (PI).

In an embodiment, the extension pipe and the distribution pipe may be detachably connected to one another, and the distribution pipe and the fire-extinguishing tube may be detachably connected to one another.

At least some of the above and other features of the invention are set out in the claims.

### BRIEF DESCRIPTION OF THE DRAWINGS

The following drawings attached to this specification illustrate preferred embodiments of the disclosure and, together with the detailed description of the invention described below, serve to further understand the technical idea of the disclosure; therefore, the disclosure should not be interpreted as being limited to matters described in such drawings.
FIG. 1 is a perspective view schematically illustrating an example of an energy storage system according to at least one embodiment of the disclosure;
FIG. 2 is a perspective view schematically illustrating an example of a battery module illustrated in FIG. 1;
FIG. 3 is a perspective view schematically illustrating a part of the battery module of FIG. 2;
FIG. 4 is a perspective view schematically illustrating an example of a battery cell of the disclosure;
FIG. 5 is a perspective view schematically illustrating a portion of the battery module of FIG. 3;
FIG. 6 is a perspective view schematically illustrating a portion of an energy storage system according to at least one embodiment of the disclosure; and
FIG. 7 is a cross-sectional view schematically illustrating an example of a pipe part of the disclosure.

### DETAILED DESCRIPTION

Hereinafter, preferred embodiments of the disclosure will be described in detail with reference to the attached drawings. Prior to this, terms or words used in this specification and claims should not be interpreted as limited to their usual or dictionary meanings, and should be interpreted as meanings and concepts that conform to the technical idea of the disclosure based on the principle that the inventor can appropriately define the concept of the term in order to explain his or her own invention in the best way. Therefore, the embodiments described in the specification and configurations shown in the drawings are merely some preferred embodiments of the disclosure and do not represent all technical ideas of the disclosure. It should be understood that various equivalents and modifications capable of replacing these may exist at the time of filing this application.

Furthermore, when used in the specification, "comprise," "include," "comprising," and/or "including" specify the presence of stated features, numbers, steps, operations, components, elements and/or groups thereof, and do not exclude the presence or addition of one or more other features, numbers, steps, operations, components, elements and/or groups thereof.

Also, to help understanding of the disclosure, the attached drawings may not be to actual scale, and dimensions of some components may be exaggerated. Additionally, identical reference numbers may be assigned to identical components in different embodiments.

Although terms such as "first," "second," etc. are used to describe various components, these components are not limited by these terms. These terms are only used to distinguish one component from another component. Unless specifically stated otherwise, a first component could be a second component.

Throughout the specification, unless otherwise specifically stated, each element may be singular or plural.

When any configuration is arranged on the "upper (or lower)" part of a component or "above (or below)" a component, it means not only that the configuration directly contacts the upper (or lower) surface of the component but also that other configurations may be interposed between the component and the configuration arranged above (or below) the same.

Additionally, when one component is described as being "connected," "coupled," or "joined" to another component, they may be directly connected or joined, but it should be understood that other components may be "interposed" between the components, or the components may be "connected," "coupled," or "joined" through other components. Also, when one part is described as being "electrically coupled" to another part, this includes both direct connections and connections with other elements in between.

Throughout the specification, "A and/or B" means, unless specifically stated otherwise, A, B, or both A and B. That is, "and/or" includes all combinations or any combination of multiple listed items. "C to D" refers to, unless specifically stated otherwise, at least C but not more than D.

The terminology used herein is for the purpose of describing embodiments of the present disclosure and is not intended to be limiting of the present disclosure.

Hereinafter, embodiments of the disclosure will be described in detail with reference to the attached drawings. When describing with reference to the drawings, identical or corresponding components will be given the same drawing reference numerals.

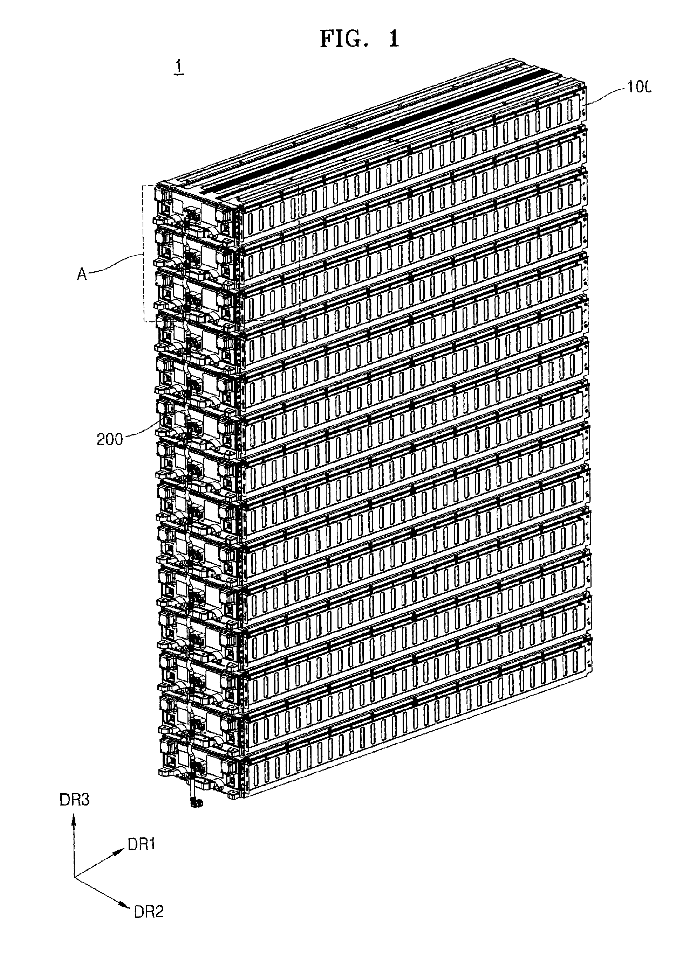

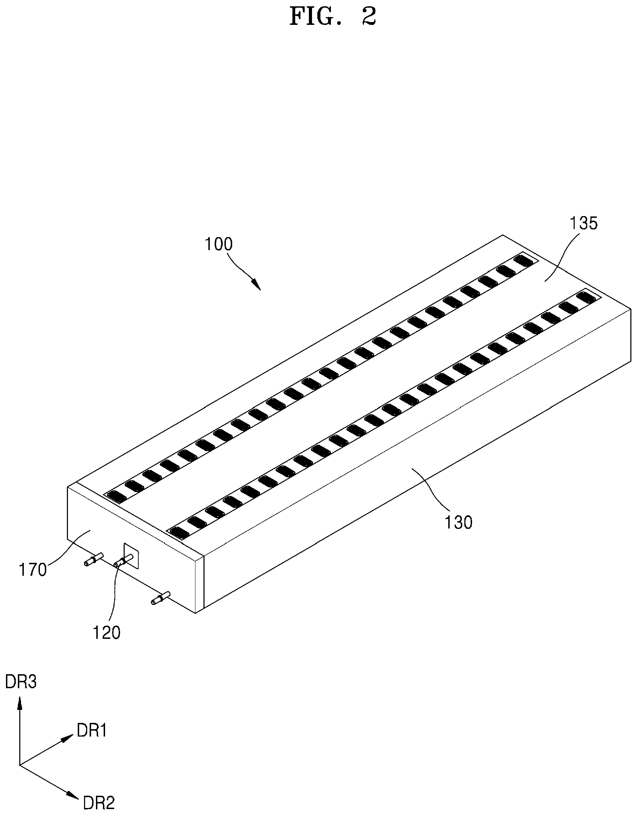

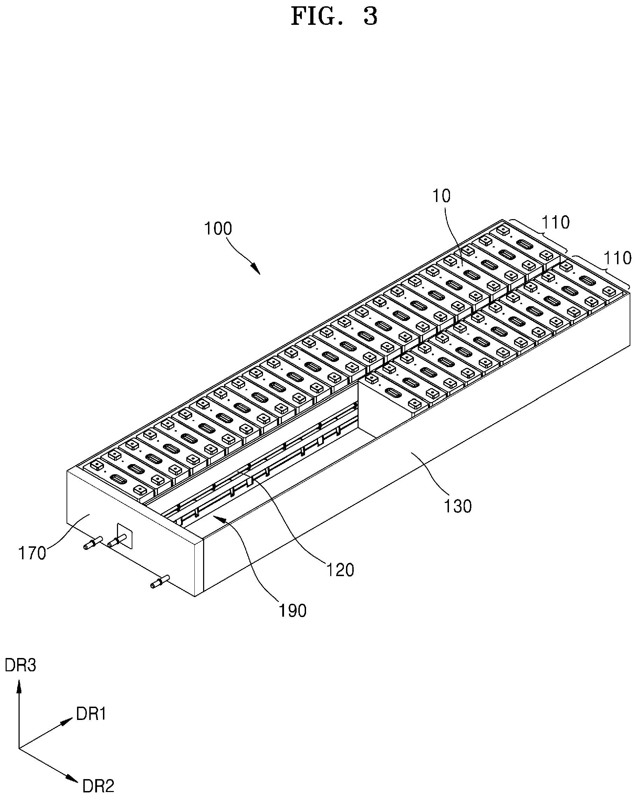

FIG. 1 is a perspective view schematically illustrating an example of an energy storage system 1 according to at least one embodiment of the disclosure. FIG. 2 is a perspective view schematically illustrating an example of a battery module 100 of FIG. 1, and FIG. 3 is a perspective view schematically illustrating a part of the battery module 100 of FIG. 2.

An energy storage system (ESS) is a system capable of generating and storing electricity, which can supply electricity and control power supply and demand smoothly. The energy storage system 1 includes a plurality of battery modules 100, each of which includes a plurality of battery cells (10, see FIGS. 3 to 5), and thus may be susceptible to fire and catch fire easily. Hereinafter, the energy storage system 1 of the disclosure with enhanced fire-extinguishing capacity will be described.

Referring to FIG. 1, the energy storage system 1 according to an embodiment of the disclosure may include a plurality of battery modules 100, a fire-extinguishing tank that accommodates a fire-extinguishing agent, and a pipe part 200 that connects the battery modules 100 to the fire-extinguishing tank.

Referring to FIGS. 2 and 3, the plurality of battery modules 100 may include a plurality of cell units 110, each of which includes a plurality of battery cells 10 arranged in a first direction DR1 such that wide surfaces of the battery cells 10 face each other. In this regard, the plurality of cell units 110 may be arranged in a second direction DR2 different from the first direction DR1.

The plurality of arranged battery cells 10 may be fixed by a housing 130, 135, or 170. The housing 130, 135, or 170 may include a pair of end plates 170 facing the wide surface of the battery cell 10, and a side plate 130, a bottom plate, and a top plate 135 which connect the pair of end plates 170 to each other. The side plate 130 may support the side of the battery cell 10, the bottom plate may support the bottom surface of the battery cell 10, and the top plate 135 may support the top surface of the battery cell 10. In some embodiments, the pair of end plates 170, the side plate 130, the bottom plate, and the top plate 135 may be connected to each other by members such as bolts.

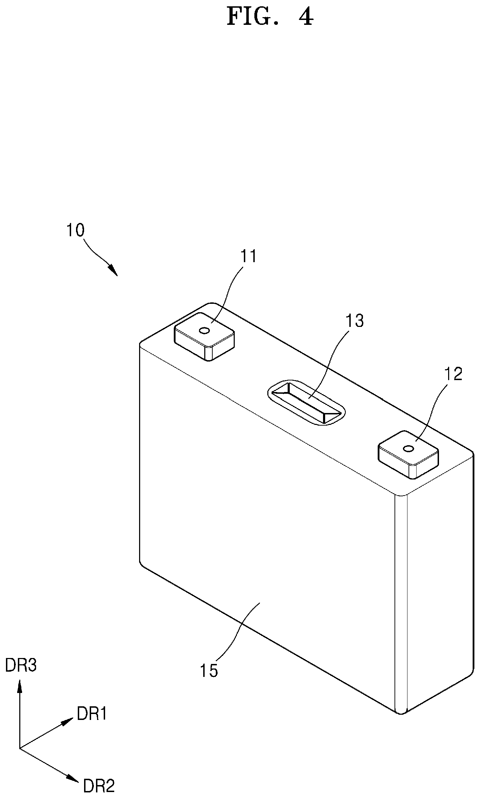

FIG. 4 is a perspective view schematically illustrating an example of the battery cell 10 of the disclosure.

Referring to FIG. 4, the battery cell 10 may include a battery case 15, and an electrode assembly and an electrolyte which are housed within the battery case 15. The electrode assembly and the electrolyte may react electrochemically to generate energy. Terminals 11 and 12 and a vent 13 that serves as an exhaust passage for gases generated internally may be provided on one side of the battery cell 10. The terminals 11 and 12 of the battery cell 10 may include a positive terminal 11 and a negative terminal 12 which have different polarities, and the terminals 11 and 12 of adjacent cells of battery cells 10 may be electrically connected to each other in series or in parallel by a connecting tab. Meanwhile, it is not limited to this structure and various connection structures can be adopted as needed. The case 15 forms the overall appearance of the battery cell 10 and may include a conductive metal such as aluminium, an aluminium alloy, or nickel-plated steel. In some embodiments, the case 15 may provide a space in which the electrode assembly is accommodated.

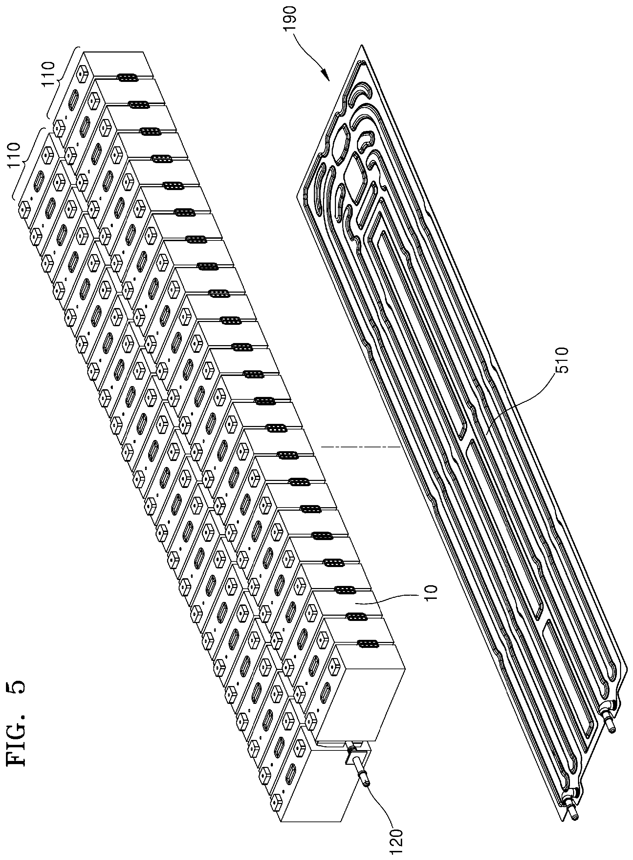

FIG. 5 is a perspective view schematically illustrating a portion of the battery module 100 of FIG. 3.

In an embodiment, referring to FIG. 5, the battery module 100 may include a cooling plate 190 having a fluid path 510 formed thereon so as to correspond to the arrangement of the plurality of battery cells 10 and a fire-extinguishing tube 120 arranged between the plurality of cell units 110.

The cooling plate 190 may be placed so that one side of the cooling plate 190 is placed to be adjacent to the battery cells 10 for heat dissipation inside the battery module 100. In some embodiments, the cooling plate 190 may be placed so as to be in contact with the bottom surface of the battery cells 10. In some embodiments, a fluid for cooling may be supplied to the fluid path 510 formed to correspond to the arrangement of the battery cells 10.

In some embodiments, the fire-extinguishing tube 120 may be arranged along the first direction DR1 between a pair of adjacent cell units of the cell units 110 within the battery module 100. That is, the fire-extinguishing tube 120 may extend in the first direction DR1 past at least one side of all the cell units 110 within the battery module 100. The fire-extinguishing tube 120 arranged between the plurality of cell units 110 is connected to the fluid path 510 formed on the cooling plate 190 so that cooling fluid may flow to perform a cooling function between the plurality of cell units 110. In addition, the fire-extinguishing tube 120 may be a tube through which a fire-extinguishing agent flows and may be a component which allows the fire-extinguishing agent to move and to be sprayed when a thermal runaway occurs in the battery cell 10.

In some embodiments, the fire-extinguishing tube 120 may include at least one of polyamide (PA), polycarbonate (PC), polyetheretherketone (PEEK), polyetherketoneketone (PEKK), polyphenylene sulfide (PPS), polyether imide (PEI), polyethersulfone (PES), or polyimide (PI), and materials the fire-extinguishing tube 120 can include are not limited thereto. In some embodiments, the fire-extinguishing tube 120 may include a material having a melting point of 260°C or less.

High heat caused by an event such as a fire or explosion in one of the battery cells 10 inside the energy storage system 1 may melt the fire-extinguishing tube 120 near the corresponding cell of the battery cells 10.

In this way, when the fire-extinguishing tube 120 melts during thermal runaway of one of the battery cells 10, the cooling fluid and extinguishing agent inside the fire-extinguishing tube 120 may be sprayed toward the battery cell 10 to suppress the thermal runaway.

In some embodiments, the fire-extinguishing tube 120 may be positioned at a position at least 30% but not more than 90% of the height of the battery cell 10.

Since the fire-extinguishing tube 120 is positioned at the position at least 30% but not more than 90% of the height of the battery cell 10, the fire-extinguishing tube 120 melts immediately near a specific cell of the battery cells 10 that has experienced thermal runaway, thereby immersing the corresponding cell of the battery cells 10 in a fire-extinguishing agent to lower the temperature, and fire suppression and blocking heat transfer to surrounding cells of the battery cells 10.

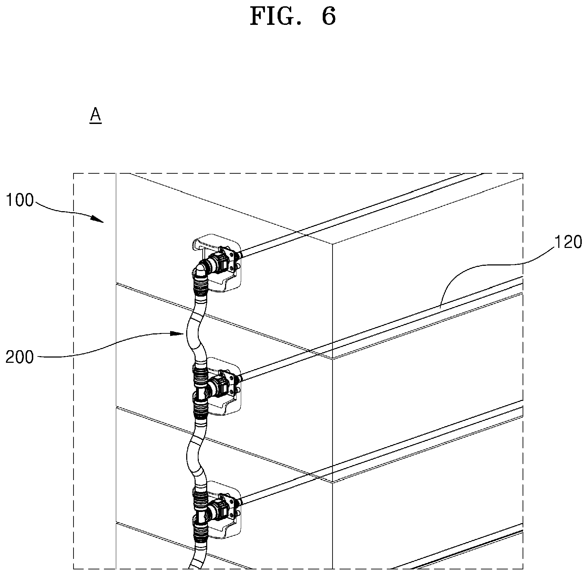

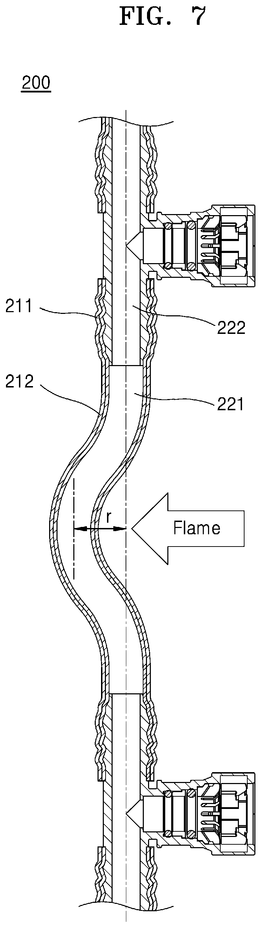

FIG. 6 is a perspective view schematically illustrating a portion of the energy storage system 1 according to at least one embodiment of the disclosure, and FIG. 7 is a cross-sectional view schematically illustrating an example of a pipe part 200 of the disclosure.

In an embodiment, referring to FIGS. 6 and 7, the pipe part 200 of the energy storage system 1 includes a distribution pipe 222 connected to the fire-extinguishing tube 120 in the plurality of battery modules 100, and an extension pipe 221 including connecting portions connected to the distribution pipe 222 and a curved portion arranged between the connecting portions.

The distribution pipe 222 may include opposite ends that may be coupled and connected to an extension pipe 221 or an end cap, to extend and connect a plurality of extension pipes 221.

In some embodiments, the distribution pipe 222 may include an area between opposite ends thereof that may be coupled and connected to the fire-extinguishing tube 120 of each of the battery modules 100.

That is, the extension pipe 221 and the distribution pipe 222 may form one pipe part 200 corresponding to the arrangement of the battery module 100, and the fire-extinguishing agent supplied to the pipe part 200 may move along the extension pipe 221 and branched to the fire-extinguishing tube 120 in the battery module 100 through the distribution pipe 222, and the fire-extinguishing agent may be sprayed to the battery cell 10 where the fire occurred.

In this regard, the extension pipe 221 and the distribution pipe 222 are detachably connected to each other, and the distribution pipe 222 and the fire-extinguishing tube 120 are detachably connected to each other, which facilitates the product assembly process and improves the maintenance efficiency of parts.

Meanwhile, the curved portion of the extension pipe 221 may have a shape that protrudes in a direction away from the plurality of battery modules 100. This addresses the situation where when a flame occurs due to thermal runaway of the battery cell 10 in the battery module 100, the pipe part 200 is damaged by flame so that the fire-extinguishing agent is prevented from reaching the fire-extinguishing tube 120.

Additionally, the curved portion may be positioned in an area corresponding to in between a pair of adjacently arranged modules of the battery modules 100. When a flame occurs within the battery module 100, flames are more likely to erupt into the space between the battery modules 100 compared to the area enclosed by the housing 130, 135, or 170. Therefore, the pipe part 200 positioned in the area between a pair of adjacently arranged modules of the battery modules 100 is most vulnerable and easily exposed to flames. Accordingly, by arranging the curved portion in this area and ensuring the separation distance from the battery module 100, the pipe part 200 may be protected from flames during thermal runaway of the battery cell 10.

The curved portion formed in the extension pipe 221 may efficiently absorb assembly tolerances, caused by factors such as sagging of the battery module 100, by forming a curvature, thereby facilitating product production, and may function to protect the pipe part 200 by maintaining the separation from flames of the battery module 100. However, when the curvature is formed too small, these effects may be minimal. On the other hand, when the curvature is formed significantly, the movement of the extinguishing agent is not smooth when sprayed, the extinguishing agent may accumulate in the curved portion, or the spraying speed may be slowed down. In addition, as the curvature of the curved portion of the extension pipe 221 becomes larger, the amount of material required to manufacture the extension pipe 221 increases, resulting in higher manufacturing costs.

In some embodiments, the extension pipe 221 may have a curved shape such that the distance between the center of the curved portion and the center of each of the connecting portions is set to be in a range of 1.5% to 15% of the length of the extension pipe 221.

In another embodiment, the curved portion of the extension pipe 221 includes a first layer 211 and a second layer 212 including a different material from the first layer 211.

In an embodiment, the first layer 211 may include at least one of thermoplastic polyurethane (TPU), thermoplastic polyester elastomer (TPEE), thermoplastic vulcanizate (TPV), or thermoplastic elastomer (TPE), and materials the first layer 211 can include are not limited thereto.

In some embodiments, the second layer 212 may include at least one of polyamide (PA), polycarbonate (PC), polyetheretherketone (PEEK), polyetherketoneketone (PEKK), polyphenylene sulfide (PPS), polyether imide (PEI), polyethersulfone (PES), or polyimide (PI), and materials the second layer 212 can include are not limited thereto.

The first layer 211 and the second layer 212 include materials having flexibility and elasticity as listed above, enabling efficient response to tolerance variations during assembly.

In addition, due to the double structure of the first layer 211 and the second layer 212, the pipe part 200 can have a higher heat resistance effect compared to a single structure, and even with materials having flexibility and elasticity, the pipe part 200 can form and maintain a piping of desired shape.

According to embodiments of the disclosure, when a cooling fire occurs in an energy storage system, the fire-extinguishing agent is configured to be directly sprayed inside a battery module so that the fire-extinguishing effect can be enhanced.

In addition, by constructing a fire-extinguishing pipe structure that has excellent heat resistance and is easy to assemble during manufacturing, the productivity of the energy storage system may be improved and manufacturing costs may be reduced.

However, the effects obtainable through the disclosure are not limited to the effects described above, and other technical effects not described will be clearly understood by those skilled in the art from the description of the disclosure described below.

Although the disclosure has been described above by means of limited embodiments and drawings, the disclosure is not limited thereto. It is apparent that various modifications and variations may be possible by a person having ordinary skill in the art within the disclosure and the scope of equivalents of the claims to be described below.

## Claims

1. An energy storage system comprising:
a plurality of battery modules;
a fire-extinguishing tank accommodating a fire-extinguishing agent; and
a pipe part connecting the plurality of battery modules to the fire-extinguishing tank, wherein
the plurality of battery modules comprise a plurality of battery cells and a fire-extinguishing tube which extends into the interior of each of the plurality of battery modules along an arrangement of the plurality of battery cells, and
the pipe part comprises:
a distribution pipe connected to the fire-extinguishing tube in the battery modules; and
an extension pipe including connecting portions connected to the distribution pipe, and a curved portion disposed between the connecting portions.

2. The energy storage system of claim 1, wherein
the curved portion protrudes in a direction away from the plurality of battery modules.

3. The energy storage system of claim 1 or claim 2, wherein
the curved portion is disposed between adjacent battery modules of the plurality of battery modules.

4. The energy storage system of any one of claims 1 to 3, wherein
a distance between a center of the curved portion and a center of each of the connecting portion is 1.5% to 15% of a length of the extension pipe.

5. The energy storage system of any one of claims 1 to 4, wherein the curved portion comprises a first layer and a second layer comprising a material different from a material of the first layer.

6. The energy storage system of claim 5, wherein
the first layer comprises at least one of thermoplastic polyurethane (TPU), thermoplastic polyester elastomer (TPEE), thermoplastic vulcanizate (TPV), or thermoplastic elastomer (TPE).

7. The energy storage system of claim 5 or claim 6, wherein
the second layer comprises at least one of polyamide (PA), polycarbonate (PC), polyetheretherketone (PEEK), polyetherketoneketone (PEKK), polyphenylene sulfide (PPS), polyether imide (PEI), polyethersulfone (PES), or polyimide (PI).

8. The energy storage system of any one of claims 1 to 7, wherein the fire-extinguishing tube is positioned at a position at least 30% but not more than 90% of the height of each of the battery cells.

9. The energy storage system of any one of claims 1 to 8, wherein the fire-extinguishing tube comprises at least one of polyamide (PA), polycarbonate (PC), polyetheretherketone (PEEK), polyetherketoneketone (PEKK), polyphenylene sulfide (PPS), polyether imide (PEI), polyethersulfone (PES), or polyimide (PI).

10. The energy storage system of any one of claims 1 to 9, wherein the extension pipe and the distribution pipe are detachably connected to one another, and the distribution pipe and the fire-extinguishing tube are detachably connected to one another.

11. An energy storage system comprising:
a plurality of battery modules;
a fire-extinguishing tank accommodating a fire-extinguishing agent; and
a pipe part connecting the plurality of battery modules to the fire-extinguishing tank, wherein
the plurality of battery modules comprise a plurality of battery cells and a fire-extinguishing tube which extends into the interior of each of the plurality of battery modules along the arrangement of the plurality of battery cells, and
the pipe part comprises a first layer and a second layer comprising a material different from a material of the first layer.

12. The energy storage system of claim 11, wherein
the pipe part comprises: a distribution pipe connected to each of the plurality of fire-extinguishing tubes; and an extension pipe including connecting portions connected to the distribution pipe, and a curved portion disposed between the connecting portions.

13. The energy storage system of claim 12, wherein
the curved portion protrudes in a direction away from the plurality of battery modules.

14. The energy storage system of claim 12 or claim 13, wherein
the curved portion is disposed between adjacent battery modules of the plurality of battery modules.

15. The energy storage system of any one of claims 12 to 14, wherein the extension pipe and the distribution pipe are detachably connected to one another, and the distribution pipe and the fire-extinguishing tube are detachably connected to one another.
